Europäisches Patentamt

European Patent Office

Office européen des brevets

(11) Publication number: **0 365 197**
**A2**

## (12) EUROPEAN PATENT APPLICATION

(21) Application number: **89310343.2**

(22) Date of filing: **10.10.89**

(51) Int. Cl.5: **F16B 21/02**

(30) Priority: **18.10.88 GB 8824355**

(43) Date of publication of application:
**25.04.90 Bulletin 90/17**

(84) Designated Contracting States:
**DE ES FR IT**

(71) Applicant: **CAMLOC (U.K.) LIMITED**
**15 New Star Road**
**Leicester LE4 7JD(GB)**

(72) Inventor: **Lindley, Adrian Q.**
**20 Bourne Road Colsterworth**
**Grantham Lincolnshire(GB)**
Inventor: **Newman, Geoffrey**
**22 Jubilee Drive**
**Glenfield Leicester(GB)**

(74) Representative: **Goodenough, Nigel et al**
**A.A. Thornton & Co. Northumberland House**
**303-306 High Holborn**
**London WC1V 7LE(GB)**

(54) **Fixing device.**

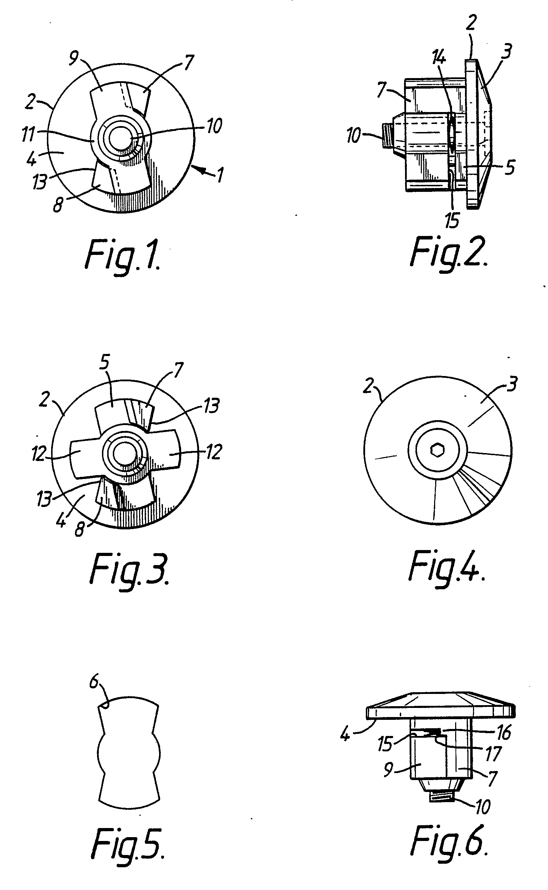

(57) A fixing device (1) comprises a body (2) having a rear surface (4) from which extends a double key hole shaped boss (5). A pair of pins (7,8) project from the boss and receive therebetween a locking member (9) which is secured to the body member by a screw (10). In a first limit position (Figure 1) the locking member abuts the pins so that the fixing device may be offered up to a pair of panels having aligned double key hole shaped openings to pass the locking member (9) through the openings and leave the boss (5) positioned within the openings. The screw is then rotated from the side of the panel from which the fixing device was inserted to move the locking member (9) to a second limit position illustrated in Figure 3 defined when the leading faces of the locking member arms (12) abut the corners (13) of the pins (7,8). Continued rotation of the screw draws the locking member (9) towards the body member (2) to clamp the panels therebetween. The fixing device requires access only to one surface of the panels being clamped, and requires only appropriately shaped openings in the panels.

Fig.1.

Fig.3.

## FIXING DEVICE

This invention relates to a fixing device, and in the preferred embodiment provides a fixing device which can be inserted from one side of a pair of members to be clamped together, and tightened from that side without access to the rear of the fixing device.

According to one aspect of the present invention there is provided a fixing device comprising: a body member having a front surface and a rear surface; at least one pin projecting from the rear surface of the body member; a locking member rotatable relative to the body member between a first limit position defined by the at least one pin and a second limit position angularly spaced from the first limit position; and a screw having a head accessible from the front of the fixing device and extending through the body member into screw threaded engagement with the locking member, the arrangement being such that with the locking member in the first limit position the fixing device may be offered up to a pair of aligned openings in panels to be fixed to pass the locking member through the openings and locate the at least one pin in the openings whereupon the screw may be rotated to move the locking member into the second limit position which is out of register with the openings, and then further rotated to draw the locking member towards the body member to clamp the panels therebetween.

The invention enables the panels to be clamped together operating from one side only of the panels, and does not require any special threads or anchorages to be provided on the panels. All that is required for operation of the device is to provide the panels with aligned through openings of appropriate shape.

The invention will be better understood from the following description of a preferred embodiment thereof, given by way of example only, reference being had to the accompanying drawing wherein:

Figure 1 is a view from the rear of a preferred embodiment of fixing device according to the present invention, the locking member of the fixing device being shown in the unlocked (insertion) position;

Figure 2 is a side view of the fixing device of Figure 1;

Figure 3 is a view corresponding to the view of Figure 1 showing the locking member in the locked position;

Figure 4 is a front view of the embodiment of Figures 1-3;

Figure 5 illustrates the shape of through opening required in a panel for operation of the embodiment of Figures 1-4; and

Figure 6 is a top plan view of the embodiment of Figure 1

Referring to the drawings, the fixing device 1 comprises a body 2 having a front surface 3 and a rear surface 4. The body 2 includes a boss 5 on the rear surface, the cross-sectional shape of the boss 5 being substantially in the form of a "double key hole", as illustrated in Figure 5. Figure 5 actually illustrates the shape of opening 6 required in panels to be fixed by the fixing device 1, but the shape of the boss 5 corresponds to that of the opening 6, although the size of the boss 5 is slightly smaller than that of the opening 6 to provide working clearance.

A pair of pins 7,8 project from the rear surface of the body member.

A locking member 9 is secured to the body member by a screw 10 and is rotatable relative to the body member about the axis of the screw between a first limit position (illustrated in Figure 1) and a second limit position (illustrated in Figure 3). The locking member 9 comprises a central hub 11 and a pair of arms 12 projecting radially from the central hub. When in the first limit position (illustrated in Figure 1) the pins 7,8 and the locking member 9 are in close abutting engagement, and together overlie the boss 5. In this configuration, therefore, the fixing device may be offered up to a pair of panels having aligned openings 6 as illustrated in Figure 5, and the fixing device may be pushed into position such that the locking member 9 passes through the aligned openings. When the fixing device is pushed fully home, the boss 5 will extend through one of the openings, and into the other opening to provide shear carrying capacity; the pins 7,8 will project from the boss 5 through any portion of the apertures not occupied by the boss 5; and the locking member 11 will be located on the rear side of the openings.

In this configuration, the screw 10 may be rotated by means of a suitable tool, for example an Allen key, to rotate the locking member anti-clockwise (as viewed in Figure 1) until it arrives at the second limit position illustrated in Figure 3. In this second limit position, the leading faces of the arms 12 engage corners 13 of the pins 7,8 in order to prevent further rotation of the locking member. In order to ensure that the screw 10 can apply sufficient torque to the locking member 9 to provide reliable rotation of the locking member, the screw threaded connection between the screw 10 and the locking member 9 is preferably stiff. This can conveniently be provided by using any conventional thread self-locking arrangement known in the art, for example by providing a captive nylon bush on the locking member 9 which is in tight engagement with the screw threads of the screw 10.

In use, when further rotation of the locking member 9 is prevented by engagement of the arms 12 with the corners 13, continued rotation of the screw 10 will, by virtue of the screw threaded connection between the screw 10 and the locking member 9, draw the locking member towards the flange 4. In order to accommodate movement of the locking member, the adjacent faces of the locking member 9 and boss 12 are spaced apart in the normal unlocked configuration illustrated in Figures 1 and 2, and a series of spring washers 14 are provided therebetween. The washers 14 will be collapsed by continued rotation of the screw 10 as described above, permitting limited movement of the locking member 9 towards the flange 4. Such locking movement will clamp the panel members located between the flange 4 and the locking member 9 tightly to each other.

It will be appreciated that the described embodiment of the invention provides a readily applied fixing device which requires nothing of the panels to be fixed other than the provision of opening 6. Such openings can, of course, readily be stamped in sheet material.

The above described fixing device may be released by rotating the screw 10 in the opposite direction to that required for tightening. This will initially result in relieving the panels of the clamp force imposed by the screw. Rearward movement of the locking member 9 will be accommodated by relaxation of the spring washers 14. When the friction between the locking member 9 and the rearmost panel falls below a predetermined level, the stiff connection between the screw 10 and the locking member 9 will be able to impart sufficient torque to the locking member to rotate the locking member back to the position illustrated in Figure 1, whereupon the fixing device may be withdrawn from the panels.

In order to ensure that the device may be refitted without difficulty means are preferably provided to ensure that, during unlocking, the locking member cannot return to the Fig. 1 position until the confronting surfaces 4,15 of the body member 2 and the locking member 9 are spaced apart by a predetermined amount, the predetermined amount being slightly greater than two panel thicknesses. To this end, the pins 7,8 are relieved to provide steps 16 over which the locking member must pass in order to arrive at the Fig. 1 position. Thus if, during unlocking, the locking member is turned in the unlocking direction before the desired separation of the surfaces 4,15 has occurred, the locking member will abut the front face 17 of the steps 16, and in this configuration the fixing device will not pass through the openings 6. Continued rotation of the screw 10 will permit the surfaces 4,15 to move further apart under the influence of the spring washers 14 until the leading edge of the locking member passes over the step 16 to bring the components into the Fig. 1 configuration, whereupon the fixing device may be removed.

It will be noted that neither installation nor removal of the fixing device requires access to the rear face of the panels. Further, because the panels are merely required to be formed with openings of an appropriate shape, the fastening can be inserted from either side of a pair of panels to be locked, according to circumstances.

In a particularly preferred embodiment of the invention the body member and pins are an integral die casting and the locking member is a separate die casting. Preferably, the die cast components incorporate a taper towards the axis of the screw 10 from the flange 4 to the rearmost extremity of the device. This aids die casting and makes insertion of the device easier.

## Claims

1. A fixing device comprising: a body member having a front surface and a rear surface; at least one pin projecting from the rear surface of the body member; a locking member rotatable relative to the body member between a first limit position defined by the at least one pin and a second limit position angularly spaced from the first limit position; and a screw having a head accessible from the front of the fixing device and extending through the body member into screw threaded engagement with the locking member, the arrangement being such that with the locking member in the first limit position the fixing device may be offered up to a pair of aligned openings in panels to be fixed to pass the locking member through the openings and locate the at least one pin in the openings whereupon the screw may be rotated to move the locking member into the second limit position which is out of register with the openings, and then further rotated to draw the locking member towards the body member to clamp the panels therebetween.

2. A fixing device according to claim 1 wherein the body member includes a boss on the rear surface thereof, the cross-sectional shape of the boss being complementary to the shape of the openings to provide resistance to shear movement of the panels relative to each other.

3. A fixing device according to claim 2 wherein the boss is non-circular.

4. A fixing device according to any preceding claim wherein a pair of pins project from the rear surface of the body member and the locking member comprises a central hub and a pair of arms projecting radially from the central hub, the arrangement being such that in the first limit position the arms of the locking member are in close abutting engagement with the pins.

5. A fixing device according to any preceding claim wherein means are provided for biasing the locking member axially away from the surface of the body member against which one of the panels is clamped in use.

6. A fixing device according to any preceding claim wherein means are provided for preventing the locking member adopting the first limit position unless the spacing between the confronting surfaces of the locking member and the body member between which the panels are in use clamped exceeds a predetermined value.

7. A fixing device according to claim 6 wherein said preventing means comprises steps formed at the proximal end of the pins for engagement by the locking member if the said spacing is less than the predetermined value.

8. A fixing device according to any preceding claim wherein means are provided to render the screw threaded connection between the screw and the locking member stiff.

9. A fixing device according to any preceding claim wherein the minimum size of opening required in the panels to receive the fixing device is a double key hole shaped opening comprising a central circular portion and a pair of diametrically opposed dovetail shaped portions extending from the central portion.

10. A fixing device according to any preceding claim wherein the body member and the pins are an integral die casting.

Fig.1.

Fig.2.

Fig.3.

Fig.4.

Fig.5.

Fig.6.